# EUROPÄISCHE PATENTSCHRIFT

(11) **EP 4 479 838 B1**
(45) Veröffentlichungstag und Bekanntmachung des Hinweises auf die Patenterteilung: **12.11.2025**
(21) Anmeldenummer: 23814131.1
(22) Anmeldetag: 26.11.2023
(51) Int. Cl.: G06F 8/65

(54) **FAHRZEUGÖKOSYSTEM**
VEHICLE ECOSYSTEM
ÉCOSYSTÈME DE VÉHICULE

(30) Priorität: 09.12.2022 DE 102022004604
(43) Veröffentlichungstag der Anmeldung: 25.12.2024
(73) Patentinhaber: Mercedes-Benz Group AG, 70372 Stuttgart (DE)
(72) Erfinder: FRIESEN, Viktor, 76139 Karlsruhe (DE); KOLLER, Micha, 70734 Fellbach (DE); REHBORN, Hubert, 71069 Sindelfingen (DE)
(74) Vertreter: Novagraaf Group
(86) Internationale Anmeldenummer: PCT/EP2023/083083
(87) Internationale Veröffentlichungsnummer: WO 2024/120856

(56) Entgegenhaltungen:
- DE-A1- 102020 111 880

## Beschreibung

Die Erfindung betrifft ein Fahrzeugökosystem nach der im Oberbegriff von Anspruch 1 näher definierten Art.

Während der Fahrt mit einem Fahrzeug können sich die Fahrzeuginsassen langweilen. Dies ist insbesondere der Fall, wenn sich das Fahrzeug im Stau oder stockendem Verkehr aufhält. Zudem ist damit zu rechnen, dass mit zunehmendem Automatisierungsgrad häufiger Langeweilesituationen auftreten, da die fahrzeugführende Person ihre Aufmerksamkeit weniger bzw. gar nicht mehr dem Fahrgeschehen widmen muss. Somit existiert das Bedürfnis, Fahrzeuginsassen während der Nutzung ihres Fahrzeugs abzulenken bzw. zu unterhalten.

Generell sind Plattformen zum Vermitteln von Microjobs bekannt. Personen, die einer solchen Tätigkeit nachgehen, werden auch als Clickworker bezeichnet. Das Bereitstellen des Zugangs zu solchen Microjobs über das Internet wird auch als Crowdsourcing bezeichnet. Die bekanntesten Anbieter solcher Plattformen sind Amazon Web Services, Inc. mit der Plattform Mechanical Turk, auch als mturk bekannt, sowie im deutschsprachigen Raum Clickworker.de. Über eine solche Plattform können vergleichsweise simple und kurze Aufträge angenommen und bearbeitet werden, wie das Durchführen eines Lektorats, das Beantworten von Fragebögen, das Verifizieren von Kl-Lerndaten und dergleichen. Neben Geld erfolgt eine Entlohnung der Arbeiter meist mittels Gutscheinen.

Fahrzeughersteller sind darüber hinaus immer bestrebt, ihre Fahrzeuge weiterzuentwickeln, sodass eine höhere Zuverlässigkeit und insbesondere Kundenzufriedenheit erreicht wird.

Die DE 10 2014 204 227 A1 offenbart einen AD-Manager für ein Fahrzeug-Multimediasystem. Der AD-Manager erhebt kontextbezogene Daten, die während einer Fahrzeugnutzung anfallen und ermöglicht das Bereitstellen von Werbeanzeigen im Fahrzeug, die zum entsprechenden Kontext passen. Dabei wird auch eine Aufforderung an einen Nutzer zur Interaktion gestellt. Basierend auf der empfangenen Benutzereingabe wird dann ein weiterer Satz von Anzeigekomponenten ausgegeben.

Das Durchführen von Umfragen in einem Fahrzeug ist ferner aus der US 10,636,046 B2 bekannt.

Ferner offenbart die DE 10 2020 111 880 A1 die Datenfreigabe zur Fahrzeugaktualisierung. Nachdem eine Softwareaktualisierung für eine Fahrzeugkomponenten verfügbar ist, werden Verwendungsdaten eines Fahrzeugs erhoben, welche ein Verwendungsmuster des Fahrzeugs beschreiben. Dies erlaubt es Zeitfenster zum Installieren der Softwareaktualisierung im Fahrzeug zu finden. Dabei kann ein mobiles Endgerät wie ein Smartphone mittelbar den Datenverkehr zwischen einem Updateserver und einer Recheneinheit des Fahrzeugs weiterleiten.

Der vorliegenden Erfindung liegt die Aufgabe zugrunde, ein verbessertes Fahrzeugökosystem anzugeben, welches es einem Fahrzeughersteller erleichtert, seine Fahrzeuge weiterzuentwickeln.

Erfindungsgemäß wird diese Aufgabe durch ein Fahrzeugökosystem mit den Merkmalen des Anspruchs 1 gelöst. Vorteilhafte Ausgestaltungen und Weiterbildungen ergeben sich aus den hiervon abhängigen Ansprüchen.

Ein gattungsgemäßes Fahrzeugökosystem, umfassend eine zentrale Recheneinrichtung und eine Fahrzeugflotte, wobei die Fahrzeuge der Fahrzeugflotte mit der zentralen Recheneinrichtung in bidirektionaler Kommunikation stehen und dazu eingerichtet sind, in ihrer Konfiguration durch das Empfangen von Informationen von der zentralen Recheneinrichtung geändert zu werden, wird erfindungsgemäß dadurch weitergebildet, dass
- die zentrale Recheneinrichtung dazu eingerichtet ist, einen Entwicklungsauftrag zumindest zu erhalten, wobei der Entwicklungsauftrag zumindest beschreibt, welche Fahrzeugkomponente weiterzuentwickeln ist;
- die zentrale Recheneinrichtung ferner dazu eingerichtet ist, in Abhängigkeit des Entwicklungsauftrags ein Entwicklungsdatenpaket zu erzeugen und dieses an eine erste Menge an Fahrzeugen der Fahrzeugflotte zu verteilen, wobei das Entwicklungsdatenpaket zumindest Interaktionsinformationen sowie optional Konfigurationsinformationen umfasst, wobei die Interaktionsinformationen einen vordefinierten Interaktionsablauf mit Fahrzeuginsassen über eine Mensch-Maschine-Schnittstelle beschreiben und die Konfigurationsinformationen Informationen zum Einbringen einer neuen und/oder Ändern einer bestehenden, auf Software basierenden Fahrzeugfunktionalität enthalten;
- die zentrale Recheneinrichtung ferner dazu eingerichtet ist, die erste Menge an Fahrzeugen der Fahrzeugflotte zur Ausführung des Entwicklungsdatenpakets anzusteuern, wobei in den Fahrzeugen jeweils in Abhängigkeit der Interaktionsinformationen zumindest eine Fahrzeugfunktionalität und der Interaktionsablauf ausgeführt werden sowie optional in Abhängigkeit der Konfigurationsinformationen zumindest eine die Fahrzeugfunktionalität betreffende Fahrzeugkonfiguration geändert wird, wobei die Fahrzeuge dazu eingerichtet sind, im Zuge des Interaktionsablaufs bezogene Nutzerinteraktionsinformationen zu Erfassen und an die zentrale Recheneinrichtung zu übermitteln;
- die zentrale Recheneinrichtung ferner dazu eingerichtet ist, die von der ersten Menge an Fahrzeugen der Fahrzeugflotte erhaltenen Nutzerinteraktionsinformationen zu verarbeiten und in Abhängigkeit der Verarbeitung der Nutzerinteraktionsinformationen ein Einbringungsdatenpaket zu erzeugen, wobei das Einbringungsdatenpaket Informationen zum Einbringen und/oder Ändern besagter Fahrzeugfunktionalität enthält; und
- die zentrale Recheneinrichtung ferner dazu eingerichtet ist, das Einbringungsdatenpaket an eine zweite Menge an Fahrzeugen der Fahrzeugflotte zu verteilen und dort jeweils zum Implementieren auszuführen; und wobei
die zentrale Recheneinrichtung dazu eingerichtet ist, einen Entwicklungsauftrag selbst zu initiieren, wobei zumindest eine Teilmenge der Fahrzeuge der Fahrzeugflotte dazu eingerichtet sind, Nutzungsinformationen zu erheben und an die zentrale Recheneinrichtung zu übertragen, wobei die Nutzungsinformationen einen Fahrzeugfunktionalitätenablauf beschreiben, und die zentrale Recheneinrichtung ferner dazu eingerichtet ist, die Nutzungsinformationen zu verarbeiten und darin zu erkennen, dass das Selbstinitiieren des Entwicklungsauftrags notwendig ist, wenn ein Vergleich eines im Fahrzeugfunktionalitätenablauf enthaltenen Interaktionserfolgs mit einem Interaktionserfolgsschwellwert ergibt, dass der Interaktionserfolg kleiner ist als der Interaktionserfolgsschwellwert, wobei der Interaktionserfolg ein Maß für dir korrekte Umsetzung eines von einem Fahrzeuginsassen im Rahmen des Fahrzeugfunktionalitätenablaufs erteilten Befehls darstellt.

Mit anderen Worten beschreibt das erfindungsgemäße Fahrzeugökosystem ein Fahrzeugökosystem, welches die Fähigkeit aufweist, sich selbst weiterzuentwickeln. Hierzu interagiert das Fahrzeugökosystem mit den Nutzern der Fahrzeuge, um Feedback von den Nutzern einzuholen, wie gut oder schlecht eine neue Entwicklung funktioniert. Basierend auf diesem Feedback kann das Fahrzeugökosystem dann automatisch die entsprechende Funktionalität anpassen, in den Fahrzeugen implementieren und erneut Nutzerfeedback abfragen. Dieser Vorgang ist iterativ und sorgt somit dafür, dass besonders zufriedenstellende Funktionalitäten entwickelt werden.

Der Aufwand für den Fahrzeughersteller ist dabei minimal. So muss der Fahrzeughersteller lediglich die Hardware- und Softwarekomponenten pflegen und gegebenenfalls Entwicklungsaufträge selbst anstoßen. Die eigentliche Entwicklung übernimmt das Fahrzeugökosystem automatisch selbst.

Dabei fungiert die erste Menge an Fahrzeugen der Fahrzeugflotte als "Testfahrzeug". Nach einer zufriedenstellenden Weiterentwicklung von neuen oder zu ändernden Funktionalitäten in den Testfahrzeugen werden diese dann an die weiteren Fahrzeuge der Fahrzeugflotte, also an die zweite Menge an Fahrzeugen, ausgerollt. Hierdurch wird der Nutzerkomfort verbessert, da typischerweise nicht alle Nutzer der Fahrzeuge der Fahrzeugflotte an entsprechenden Tests teilnehmen wollen und zudem im Zuge der Entwicklung auch solche Änderungen an Funktionalitäten vorgenommen werden, die diese verschlechtern und somit (temporär während des Tests) den Nutzerkomfort beeinträchtigen.

Die Komponenten der Fahrzeuge der Fahrzeugflotte, die in ihrer Konfiguration geändert werden können, sind vielfältiger Natur. Zu einer Konfiguration zählen beispielsweise Einstellungsparameter von Fahrzeuguntersystemen. So verwenden Steuergeräte entsprechende Größen zum Ansteuern von Fahrzeugkomponenten. Beispielsweise sei genannt ein Härtegrad bzw. Federweg des Fahrwerks, Schaltzeitpunkte eines Automatikgetriebes, eine Lufttemperatur einer Klimaanlage, die Ausgestaltung des Frontends einer Bedienschnittstelle zwischen Fahrzeuginsassen und Infotainmentsystem des Fahrzeugs, also beispielsweise die grafische Ausgestaltung einer Nutzeroberfläche und die darunterliegende Menüführung, bevorzugte Einstellungen einer Fahrzeuginnenraumbeleuchtung wie eine Ambientebeleuchtung und dergleichen. All diese Systeme und Funktionalitäten lassen sich konfigurieren und somit in ihrer Funktionsweise anpassen. Ebenfalls lassen sich neue Funktionalitäten in ein Fahrzeug einspielen wie besser trainierte Maschinenlernmodelle, beispielsweise wie sie zur Bilderkennung, auch als Computervision bezeichnet, eingesetzt werden oder als Sprachdialogsystem zur Nutzerinteraktion basierend auf Sprache. Mit entsprechenden KI-Methoden lassen sich dann zuverlässiger Verkehrsteilnehmer und Verkehrszeichen erkennen sowie die Intension in den Sprachbefehlen eines Nutzers zuverlässiger erkennen. Entsprechende Updates empfangen die Fahrzeuge der Fahrzeugflotte von der zentralen Recheneinrichtung drahtlos, auch als "over-the-air" bezeichnet. Hierzu können die Fahrzeuge der Fahrzeugflotte über eine Telekommunikationseinheit verfügen, die per Mobilfunk mit der zentralen Recheneinrichtung mittelbar über das Internet in Kommunikationsverbindung steht. Bei der zentralen Recheneinrichtung handelt es sich um einen Cloudserver, auch als Backend bezeichnet.

Der Entwicklungsauftrag kann von den Entwicklern des Fahrzeugherstellers selbst initiiert werden. Möchte der Fahrzeughersteller also eine bestimmte Fahrzeugkomponente weiterentwickeln, so erteilt er einen entsprechenden Entwicklungsauftrag. Die zentrale Recheneinrichtung kann den Entwicklungsauftrag jedoch auch selbst initiieren, worauf später noch eingegangen werden wird.

Das Entwicklungsdatenpaket enthält zumindest die Interaktionsinformationen und beschreibt hiermit den vordefinierten Interaktionsablauf. Die Interaktionsinformationen dienen dazu, eine solche Nutzerinteraktion hervorzurufen, die es der zentralen Recheneinrichtung ermöglicht, die relevanten zur Weiterentwicklung der entsprechenden Fahrzeugkomponente erforderlichen Informationen zu erheben. Hierzu können unterschiedliche Mensch-Maschine-Schnittstellen angesprochen werden, wie Mikrofone und Lautsprecher zur akustischen Interaktion sowie Anzeigevorrichtungen und Bedienelemente zur visuellen Interaktion. Beispielsweise lassen sich über das Kombiinstrument, ein Headup-Display, ein Zentraldisplay, die Headunit oder ein sonstiges Display im Fahrzeug Fragebögen anzeigen, die der entsprechende Fahrzeugnutzer beantwortet. Zur Interaktion kann auch ein mobiles Endgerät des Nutzers verwendet werden, welches mit dem Fahrzeug in Kommunikationsverbindung steht. Beispielsweise kann auf einem Smartphone eine App ausgeführt werden, wobei das Smartphone per Bluetooth mit dem Fahrzeug gekoppelt ist.

Beispielsweise könnte einem Fahrzeugnutzer in einem solchen Fragebogen ein Bild angezeigt werden, welches eine mit einer Fahrzeugkamera erfasste Verkehrssituation zeigt. Der Nutzer könnte dann gefragt werden, was er auf dem Bild sieht, wie der Nutzer eine Maschinenklassifizierung der im Bild erkannten Objekte bewertet, ob das angezeigte Bild zur Umgebung, in der sich das eigene Fahrzeug aktuell befindet, passt, ob ein eingespieltes Geräusch zur dargestellten Fahrzeugumgebung passt, ob eine von einem Fahrerassistenzsystem erkannte Situation zur realen Situation passt, also beispielsweise Verkehrszeichen richtig erkannt wurden, sich das Fahrzeug tatsächlich auf dem angenommen Fahrstreifen befindet, sich freie Parkplätze links oder rechts vom Fahrzeug befinden, tatsächlich ein Standstreifen auf einer Autobahn vorhanden ist, welche Beschaffenheit ein Straßenbelag aufweist und beispielsweise ob dieser vom Fahrerassistenzsystem korrekt klassifiziert wurde, ob eine Warnblinkanlage rechtzeitig aktiviert wurde, und dergleichen. Ferner kann dem Nutzer die Möglichkeit gegeben werden, gezielt Korrekturen an der Einschätzung eines Assistenzsystems vorzunehmen oder vorzuschlagen. Ebenfalls kann ein Nutzer gefragt werden, wie gut der im eigenen Fahrzeug angezeigte Verkehrsstau zur Realität passt und wo gegebenenfalls Abweichungen liegen. Ferner kann das Verhalten von weiteren Verkehrsteilnehmern bewertet werden, um beispielsweise ein Modul zum Prädizieren des Steuerungsverhaltens von weiteren Verkehrsteilnehmern weiterzuentwickeln.

Auch können sich auf physische Komponenten des Fahrzeugs auswirkende Software-Änderungen vorgenommen werden, wie das Ändern von Steuerparametern und/oder das Hinterlegen geänderter Kennlinien. So kann beispielsweise das Fahrwerk entsprechend fünf unterschiedlichen Härtegraden eingestellt werden, die der Nutzer dann bewerten muss. Dabei könnte automatisch der Härtegrad geändert werden, woraufhin der Nutzer mitteilen muss, sobald er eine fühlbare Änderung merkt. Auch kann eine autonome Fahrweise des Fahrzeugs wie das Durchführen bestimmter Fahrmanöver, also beispielsweise Einscheren, Überholen, Bremsen, Beschleunigen, Kurvenfahrt, Einparken und dergleichen, durchgeführt und dann bewertet werden. Bewertet werden kann dann beispielsweise, wie komfortabel das entsprechende Fahrmanöver durchgeführt wurde. Die Bewertung kann in Punkten, beispielsweise zwischen eins und zehn und/oder als wörtliche Beschreibung erfolgen. So kann ein Nutzer angeben, dass das Fahrmanöver als sportlich, ruckartig, gefährlich oder dergleichen empfunden wurde. Analog lässt sich die Infrastruktur in der Umgebung des Fahrzeugs bewerten und/oder kommentieren. Der Nutzer kann auch Feedback zur Nutzerschnittstelle geben. Beispielsweise kann der Nutzer abgefragt werden, welche Menüführung er intuitiver findet, ob Ansagen zu schnell oder zu langsam erfolgen, angezeigte Objekte klar erfassbar sind, und dergleichen.

Zur akustischen Nutzerinteraktion kann der Nutzer beispielsweise gefragt werden, ob die Aussprache eines Sprachdialogsystems verständlich war, die Aussprache grammatikalisch korrekt war, die Aussprache akzent- bzw. dialektfrei war, und dergleichen. Auch kann der Nutzer aufgefordert werden, einen Text zu übersetzen und die Übersetzung akustisch oder textbasiert einzugeben. Auch kann der Nutzer dazu aufgefordert werden eine Maschinenübersetzung in ihrer Qualität zu bewerten. Ferner können Audiodateien an das Fahrzeug übertragen werden und abgespielt werden. Beispielsweise können von einer KI klassifizierte Geräusche abgespielt werden und der Nutzer muss bewerten, ob die KI das Geräusch korrekt zugeordnet hat, beispielsweise eine Polizeisirene. Dabei kann der Nutzer auch bewerten, wie treffend eine automatische Benennung des Geräuschs durch ein Computersystem erfolgt ist.

Bei den hier aufgezählten Komponenten und Tätigkeiten handelt es sich lediglich um Beispiele zur Verbesserung des Verständnisses des erfindungsgemäßen Fahrzeugökosystems und sind nicht einschränkend zu verstehen.

Mit Hilfe dieser Nutzerinteraktion ist das Fahrzeugökosystem in der Lage, noch bessere, also zuverlässigere und komfortablere Einstellwerte für Fahrzeuguntersysteme zu finden, Maschinenlernmodelle wie beispielsweise Kls weiter zu trainieren, und dergleichen sowie insgesamt die Nutzerinteraktion zwischen Nutzer und Fahrzeug zu verbessern. Die dabei generierten Nutzerinteraktionsinformationen erfasst dann ein jeweiliges Fahrzeug von selbst und schickt diese zur Auswertung an die zentrale Recheneinrichtung. Dort erfolgt die Auswertung der Nutzerinteraktionsinformationen ebenfalls automatisiert, sodass kein Aufwand für die Entwickler des Fahrzeugherstellers entsteht. Selbstverständlich haben die Entwickler jedoch Zugriff auf den Analysevorgang und können somit einsehen, wie die zentrale Recheneinrichtung arbeitet und gegebenenfalls die Arbeitsweise der zentralen Recheneinrichtung anpassen. Beispielsweise können die Entwickler ändern, wie die zentrale Recheneinrichtung Aspekte bewertet, also ob ein bestimmtes von einem Nutzer erhaltenes Feedback insgesamt als positiv oder negativ zu klassifizieren ist und in welchem Ausmaß sich dieses auf die automatisierte Weiterentwicklung der Fahrzeugfunktionalitäten auswirken soll.

Nach Analyse der Nutzerinteraktionsinformationen und Durchführen der eigentlichen Komponentenentwicklung erzeugt die zentrale Recheneinrichtung besagtes Einbringungsdatenpaket. Dieses wird dann an die zweite Menge der Fahrzeuge der Fahrzeugflotte verteilt und dort implementiert. Dies ermöglicht es, die weiterentwickelten Fahrzeugkomponenten auch in die Fahrzeuge einzubringen. Die zweite Menge der Fahrzeuge kann dabei auch so groß sein, dass alle Fahrzeuge der Fahrzeugflotte gemeint sind. Selbstverständlich können nur solche Fahrzeugkomponenten bzw. Funktionalitäten konfiguriert bzw. implementiert werden, die auf Software basieren. Die Funktionsweise von physischen Fahrzeugkomponenten, zu denen neben der Hardware einer Recheneinheit im weiteren Sinne auch die mechanischen Komponenten des Fahrzeugs zählen, ist durch das Anpassen von Steuerungsparametern in Fahrzeugsteuergeräten möglich.

Wie bereits beschrieben, ist die zentrale Recheneinrichtung dazu eingerichtet, einen Entwicklungsauftrag selbst zu initiieren, wobei zumindest eine Teilmenge der Fahrzeuge der Fahrzeugflotte dazu eingerichtet sind, Nutzungsinformationen zu erheben und an die zentrale Recheneinrichtung zu übertragen, wobei die Nutzungsinformationen einen Fahrzeugfunktionalitätenablauf beschreiben, und die zentrale Recheneinrichtung ferner dazu eingerichtet ist, die Nutzungsinformationen zu verarbeiten und darin zu erkennen, dass das Selbstinitiieren des Entwicklungsauftrags notwendig ist, wenn ein Vergleich eines im Fahrzeugfunktionalitätenablauf enthaltenen Interaktionserfolgs mit einem Interaktionserfolgsschwellwert ergibt, dass der Interaktionserfolg kleiner ist als der Interaktionserfolgsschwellwert, wobei der Interaktionserfolg ein Maß für dir korrekte Umsetzung eines von einem Fahrzeuginsassen im Rahmen des Fahrzeugfunktionalitätenablaufs erteilten Befehls darstellt.

Dies sei wie folgt veranschaulicht: Als Fahrzeugfunktionalität sei stellvertretend ein Sprachdialogsystem erwähnt. Der von den Nutzungsinformationen enthaltene Fahrzeugfunktionalitätenablauf stellt dann das zwischen den Fahrzeuginsassen und dem Sprachdialogsystem geführte Gespräch dar. Dieses kann als Audiodatei und/oder als Transkript in den digitalen Daten enthalten sein. Als Interaktionserfolg lässt sich dann verstehen, dass ein Fahrzeuginsasse einen Sprachbefehl erteilt, wie beispielsweise zum Einstellen eines bestimmten Radiosenders, Ändern der Lautstärke, Aktivieren der Sitzheizung, Ändern der Lüftungseinstellung der Klimaanlage oder dergleichen, und dieser korrekt vom Sprachdialogsystem verstanden und umgesetzt wird. Gegebenenfalls kann das Sprachdialogsystem den entsprechenden Fahrzeuginsassen nicht verstehen. Der Interaktionserfolgsschwellwert kann beispielsweise 80% betragen. Wenn also in über 80% der Fälle das Sprachdialogsystem die Fahrzeuginsassen korrekt versteht und den Befehl, den die Fahrzeuginsassen tatsächlich auch ausführen möchten, umsetzt, so liegt der Interaktionserfolg über dem Interaktionserfolgsschwellwert. Ist dies hingegen nicht der Fall, bedeutet dies, dass das Sprachdialogsystem noch nicht ausreichend gut funktioniert. Hierdurch wird die zentrale Recheneinrichtung dazu in die Lage versetzt, den Entwicklungsbedarf zum Weiterentwickeln des Sprachdialogsystems zu erkennen. Darauf basierend initiiert dann die zentrale Recheneinrichtung den Entwicklungsauftrag selbst. So lassen sich für die verschiedensten Fahrzeugkomponenten und Fahrzeugfunktionalitäten entsprechende Größen definieren, anhand derer Analyse die zentrale Recheneinrichtung bewerten kann, ob ein entsprechendes System weiterentwickelt werden soll oder nicht.

Entsprechend einer vorteilhaften Weiterbildung des Fahrzeugökosystems ist dementsprechend die zweite Menge an Fahrzeugen größer als die erste Menge an Fahrzeugen. So können Nutzer, die einen Beitrag zur Weiterentwicklung der Fahrzeuge liefern wollen, ihre Fahrzeuge als Teil der ersten Menge an Fahrzeugen bereitstellen und die Fahrzeuge der übrigen Nutzer bilden die zweite Menge an Fahrzeugen aus. Generell könnte jedoch auch die zweite Menge an Fahrzeugen gleichgroß oder kleiner als die erste Menge an Fahrzeugen sein.

Eine weitere vorteilhafte Ausgestaltung des Fahrzeugökosystems sieht ferner vor, dass die zentrale Recheneinrichtung über eine Zugriffsschnittstelle verfügt und ferner dazu eingerichtet ist, Dritten über die Zugriffsschnittstelle das Initiieren eines Entwicklungsauftrags zu ermöglichen, wobei dabei die zentrale Recheneinrichtung als Mediator zum Entscheiden, wie tief besagte Dritte in die Konfiguration eines jeweiligen Fahrzeugs eingreifen dürfen, fungiert. Hierdurch kann der Fahrzeughersteller Dritten wie beispielsweise den Zulieferern des Fahrzeugherstellers, Dienstleistungsanbietern wie Versicherungen oder auch sonstigen Firmen oder Werkstätten, Zugriff auf das Fahrzeug geben, sodass die jeweiligen Dritten eigene Lösungen entwickeln können. Dabei gilt es jedoch, den Datenschutz sowie die Cybersicherheit einzuhalten. Entsprechend fungiert die zentrale Recheneinrichtung als Mediator und legt dabei die Rechte fest, bis zu welchem Grad die jeweiligen Dritten in das Fahrzeug eingreifen dürfen. Die Zugriffsschnittstelle kann beispielsweise als API realisiert sein oder eine solche API nutzen.

Entsprechend einer weiteren vorteilhaften Ausgestaltung des Fahrzeugökosystems ist zumindest eine Teilmenge der Fahrzeuge der Fahrzeugflotte dazu eingerichtet, Fahrzeugcharakteristikinformationen und/oder Nutzercharakteristikinformationen zu erheben und an die zentrale Recheneinrichtung zu übermitteln und die zentrale Recheneinrichtung ferner dazu eingerichtet, die erste und/oder zweite Menge an Fahrzeugen der Fahrzeugflotte unter Berücksichtigung der Fahrzeugcharakteristikinformationen und/oder Nutzercharakteristikinformationen zu bestimmen. Bei den Fahrzeugcharakteristikinformationen handelt es sich um die genaue Ausführung der Fahrzeuge bzw. Fahrzeugkomponenten. So beschreiben beispielsweise die Fahrzeugcharakteristikinformationen, dass es sich um einen Pickup, einen Van, ein SUV, einen Transporter, einen Sattelschlepper oder dergleichen handelt. Weitere Informationen betreffen die genaue Ausführung der Fahrzeuge, also beispielsweise welche Sonderausstattung verbaut ist, über welche Leistung die Antriebsmaschine des Fahrzeugs verfügt, ob ein elektrischer Antriebsmotor und/oder ein Verbrennungsmotor verbaut ist, ob es sich um ein Cabriolet handelt und dergleichen. So betreffen bestimmte Entwicklungsaufträge lediglich bestimmte Fahrzeugkomponenten bzw. eignen sich nur für eine eingeschränkte Fahrzeugausführung. Unter Berücksichtigung der Fahrzeugcharakteristikinformationen kann so die zentrale Recheneinrichtung jeweils die erste und/oder zweite Menge an Fahrzeugen bestimmen, sodass jeweils die Entwicklungsaufträge an die passenden Fahrzeuge verteilt werden. Müssen im Rahmen einer Entwicklung beispielsweise Kamerabilder der Fahrzeugumgebung mit Hilfe von Fahrzeugkameras aufgenommen werden und diese durch Methoden des maschinellen Lernens ausgewertet werden, so werden entsprechende Entwicklungsaufträge und Entwicklungsdatenpakete nur an solche Fahrzeuge verteilt, die auch über besagte Kameras verfügen.

Neben der genauen Ausgestaltung der Fahrzeuge können auch einen Nutzer betreffende Informationen relevant sein zur Entscheidung, an wen die jeweiligen Entwicklungsaufträge verteilt werden. Zu den Nutzercharakteristikinformationen zählen beispielsweise demographische Informationen wie Alter, Geschlecht, Herkunft und dergleichen, Wohnort, Einkommen, Hobbys, durchschnittliche Fahrstrecke pro Monat, Fahrweise, Familienstand, Anzahl der Kinder, und dergleichen. So können beispielsweise bestimmte Fahrzeugfunktionalitäten durch unterschiedliche Nutzer unterschiedlich bewertet werden. Werden dabei einen Nutzer beschreibende Informationen berücksichtigt, ist eine besonders differenzierte Bewertung durch die zentrale Recheneinrichtung möglich. So wird beispielsweise die fahrzeugführende Person mit einer sportlichen Fahrweise eher ein straffes Fahrwerk bevorzugen als ein Fahrer, der viel Wert auf Komfort legt. Andere Entwicklungsaufträge sind beispielsweise nur für solche Fahrten bzw. Fahrzeugnutzungen relevant, bei denen Kinder im Fahrzeug mitreisen. Entsprechend werden diese Entwicklungsaufträge nur an solche Fahrzeuge verteilt, in denen häufig Kinder mitreisen. Für einige Entwicklungsaufträge kann es auch erforderlich sein, dass mehrere Fahrzeuginsassen im Fahrzeug zusammen interagieren und beispielsweise einen Fragebogen als Gruppe ausfüllen. Insbesondere für Kinder kann ein solcher Fragebogen auch unter Aspekten von Gamification als Videospiel ausgestaltet sein.

Unter verschiedenen Gesichtspunkten kann die zentrale Recheneinrichtung dabei die von den Nutzern der Fahrzeuge der Fahrzeugflotte übermittelten Nutzercharakteristikinformationen gewichten. So können verschiedene Nutzer mehr oder weniger glaubwürdig sein. Dies bedeutet, dass Angaben bei der Beantwortung von Fragebögen korrekt gemacht werden. So können die Nutzercharakteristikinformationen beispielsweise einen solchen Glaubwürdigkeitsfaktor enthalten. Die Eingaben von Nutzern mit einem hohen Glaubwürdigkeitsfaktor werden entsprechend stärker gewichtet. Die Gewichtung kann jedoch auch auf sonstigen Informationen beruhen.

Eine weitere vorteilhafte Ausgestaltung des Fahrzeugökosystems sieht ferner vor, dass die zentrale Recheneinrichtung ferner dazu eingerichtet ist, Bereitschaftszeitinformationen zu empfangen, welche beschreiben, zu welchen Zeiten ein jeweiliger Fahrzeugnutzer für die Nutzung seines Fahrzeugs bereitsteht, um die erste Menge an Fahrzeugen der Fahrzeugflotte unter Berücksichtigung der Bereitschaftszeitinformationen zu bestimmen. Hierdurch lässt sich der Komfort für die Fahrzeugnutzer noch weiter steigern. Ein Fahrzeugnutzer kann einen entsprechenden Fragebogen beispielsweise auf einem mobilen Endgerät wie einem Smartphone, einem Tablet, einem Laptop oder auch auf einem Desktopcomputer ausfüllen. Dies kann er in einer ruhigen Minute zuhause tun. Besonders vorteilhaft erfolgt die Nutzerinteraktion jedoch im Fahrzeug während der Fahrzeugnutzung. So lässt sich das Auftreten von Langeweile für die Fahrzeuginsassen verhindern, zudem können die zu bewertenden Fahrzeugkomponenten direkt erlebt werden, was das Geben eines direkten Feedbacks erlaubt. Die zentrale Recheneinrichtung benötigt dabei eine Information, zu welchen Zeiten ein jeweiliger Nutzer sein Fahrzeug verwendet. Diese Bereitschaftszeitinformationen, also eine Information, an welchem Datum und zu welcher Uhrzeit der jeweilige Nutzer sein Fahrzeug verwendet, können der zentralen Recheneinrichtung direkt übermittelt werden. So kann beispielsweise ein Fahrzeugnutzer über sein mobiles Endgerät oder auch über das Infotainmentsystem des Fahrzeugs der zentralen Recheneinrichtung mitteilen, zu welchen Tagen und Uhrzeiten er mit dem Fahrzeug verreisen wird. Hierzu zählt beispielsweise auch die tägliche Pendelstrecke zur Arbeit. Die zentrale Recheneinrichtung bzw. die Fahrzeuge selbst unter Verwendung von fahrzeuginternen Recheneinheiten können auch entsprechende Reisemuster selbst erkennen.

Im einfachsten Fall übermitteln die Fahrzeuge der Fahrzeugflotte den Beginn eines Bereitschaftszeitraums, wenn die Antriebsmaschine eines jeweiligen Fahrzeugs gestartet wird. Entsprechend endet der Bereitschaftszeitraum, wenn die Antriebsmaschine manuell ausgeschaltet wird.

Entsprechend einer weiteren vorteilhaften Ausgestaltung des Fahrzeugökosystems ist zumindest eine Teilmenge der Fahrzeuge der Fahrzeugflotte dazu eingerichtet, Routeninformationen an die zentrale Recheneinrichtung zu übermitteln und die zentrale Recheneinrichtung ferner dazu eingerichtet, die Routeninformationen zur Ermittlung der Bereitschaftszeitinformationen zu verarbeiten. Wird beispielsweise in ein Navigationssystem eine Reiseroute eingegeben, so kann das Fahrzeug selbstständig ermitteln, dass während der Reisedauer entlang der Navigationsroute ein Bereitschaftszeitraum vorliegt.

Eine weitere vorteilhafte Ausgestaltung des erfindungsgemäßen Fahrzeugökosystems sieht ferner vor, dass die zentrale Recheneinrichtung ferner dazu eingerichtet ist, den einzelnen Fahrzeugnutzern jeweils ein individuelles Anreizkonto zur Verfügung zu stellen und einem jeweiligen Anreizkonto ein Anreizguthaben gutzuschreiben, wenn der respektive Fahrzeugnutzer als Teil der ersten Menge an Fahrzeugen der Fahrzeugflotte der zentralen Recheneinrichtung Nutzerinteraktionsinformationen bereitstellt. Mit anderen Worten werden die Fahrzeugnutzer, die an der Weiterentwicklung der Fahrzeugkomponenten beteiligt sind, entlohnt. Als Anreizguthaben kann dem entsprechenden Anreizkonto beispielsweise Geld, Gutscheine oder auch eine verlängerte Nutzungsdauer abonnierter Fahrzeugfunktionalitäten gutgeschrieben werden. Geld kann sich ein jeweiliger Fahrzeugnutzer dann beispielsweise auf ein Bankkonto überweisen lassen. Gutscheine können beispielsweise in einer Vertragswerkstatt zur Durchführung von Wartungen oder Reparaturen eingelöst werden. Gewisse Fahrzeugfunktionalitäten wie beispielsweise das Bereitstellen einer Sitzheizung oder das Bereitstellen einer erhöhten Antriebsleistung können abonniert werden und beispielsweise so für einen Zeitraum wie ein Jahr genutzt werden. Läuft der Zeitraum ab, so steht die Funktionalität nicht mehr zur Verfügung. Als Anreizguthaben kann dann beispielsweise ein verlängerter Monat der Funktionalitätennutzung bereitgestellt werden. Hierdurch wird die Motivation der Fahrzeugnutzer erhöht, entsprechende Nutzerinteraktionsinformationen bereitzustellen. Dies erhöht die Zuverlässigkeit, dass das Fahrzeugökosystem sich auch selbst weiterentwickeln kann.

Bevorzugt sind die Fahrzeuge der Fahrzeugflotte dazu eingerichtet, zur Ausführung eines Entwicklungsdatenpakets eine abgesicherte Umgebung bereitzustellen, wobei der Zugriff auf Fahrzeugressourcen in der abgesicherten Umgebung gegenüber dem normalen Betrieb eingeschränkt ist. Hierdurch wird im Besonderen die Cybersicherheit verbessert. Beispielsweise können auf einer Recheneinheit des Fahrzeugs virtuelle Maschinen ausgeführt werden, in denen die entsprechenden Entwicklungspakete ausgeführt werden. Auch kann die Tiefe, inwieweit eine Recheneinheit Fahrzeugfunktionalitäten nutzen kann, eingeschränkt sein. Insbesondere wenn Dritte Entwicklungsaufträge erteilen, wird hierdurch das verbotene Abgreifen von Daten bzw. Manipulieren sicherheitsrelevanter Konfigurationsparameter unterbunden.

Die Entitäten des Fahrzeugökosystems, sprich die zentrale Recheneinrichtung sowie die Fahrzeuge der Fahrzeugflotte, sind nicht nur dazu eingerichtet, das im vorigen beschriebene Vorgehen bereitzustellen, sondern führen dieses auch noch aus. Erfindungsgemäß wird somit ein Verfahren für ein Fahrzeugökosystem beschrieben, durch dessen Anwendung das Fahrzeugökosystem dazu in die Lage versetzt wird, sich selbstständig weiterzuentwickeln.

Weitere vorteilhafte Ausgestaltungen des erfindungsgemäßen Fahrzeugökosystems ergeben sich auch aus dem Ausführungsbeispiel, welches nachfolgend unter Bezugnahme auf die Figur näher beschrieben wird.

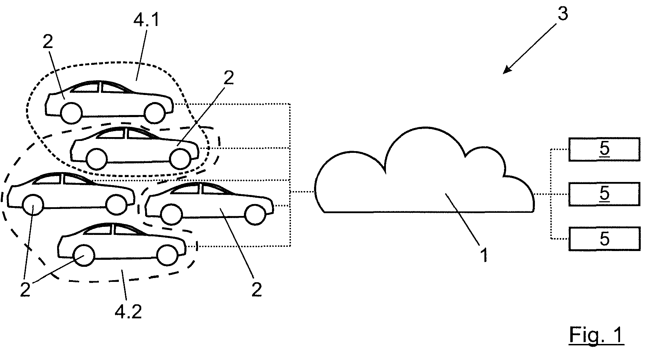

Dabei zeigt Figur 1 eine schematisierte Ansicht eines erfindungsgemäßen Fahrzeugökosystems.

Eine zentrale Recheneinrichtung 1 und eine Vielzahl an Fahrzeugen 2 bilden ein erfindungsgemäßes Fahrzeugökosystem 3 aus. Das erfindungsgemäße Fahrzeugökosystem 3 verfügt über die Möglichkeit sich selbst weiterzuentwickeln.

Hierzu verteilt die zentrale Recheneinrichtung 1 ein Entwicklungsdatenpaket an eine erste Menge 4.1 an Fahrzeugen 2 der gezeigten Fahrzeugflotte. Das Entwicklungsdatenpaket enthält Interaktionsinformationen sowie optional Konfigurationsinformationen. Die Interaktionsinformationen beschreiben einen vordefinierten Interaktionsablauf mit Fahrzeuginsassen. Die Konfigurationsinformationen sehen das Einbringen und/oder Ändern einer bestehenden auf Software basierenden Fahrzeugfunktionalität in ein jeweiliges Fahrzeug 2 vor. Die Fahrzeuginsassen bzw. Fahrzeugnutzer der Fahrzeuge 2 der ersten Menge 4.1 der Fahrzeugflotte geben Feedback über die weiterzuentwickelnde Fahrzeugkomponente entsprechend des vordefinierten Interaktionsablaufs. Die Fahrzeuge 2 bzw. die dort verbauten Recheneinheiten sammeln das Nutzerfeedback in Form von Nutzerinteraktionsinformationen und übermitteln dieses an die zentrale Recheneinrichtung 1 zurück. Dort werden die Nutzerinteraktionsinformationen ausgewertet, woraufhin die zentrale Recheneinrichtung 1 ein Einbringungsdatenpaket erzeugt. Das Einbringungsdatenpaket enthält die von den einzelnen Fahrzeugnutzern positiv bewerteten Einstellungen bzw. neu entwickelte bzw. angepasste Algorithmen und/oder Maschinenlernmodelle. Das Einbringungsdatenpaket wird dann an eine zweite Menge 4.2 an Fahrzeugen 2 der Fahrzeugflotte verteilt. Die erste Menge 4.1 und die zweite Menge 4.2 können abweichend oder auch identisch sein. Die zweite Menge 4.2 kann kleiner, gleichgroß oder bevorzugt größer sein als die erste Menge 4.1. Es können auch einzelne Fahrzeuge 2 je nach Ausführung des Entwicklungsdatenpakets nicht Bestandteil irgendeiner Menge 4.1, 4.2 sein.

Die zentrale Recheneinrichtung 1 kann situationsbedingt selbst entscheiden, welche Fahrzeuge 2 zur ersten und/oder zweiten Menge 4.1, 4.2 gehören. Hierzu berücksichtigt die zentrale Recheneinrichtung 1 Fahrzeugcharakteristikinformationen und/oder Nutzercharakteristikinformationen.

Optional können Dritte 5 Teil des Fahrzeugökosystems 3 sein. Hierbei handelt es sich beispielsweise um Zulieferer eines Fahrzeugherstellers, Werkstätten, einen Entwickler von Navigationssoftware und dergleichen. Hierdurch wird den Dritten 5 die Möglichkeit gegeben, das erfindungsgemäße Fahrzeugökosystem 3 zu nutzen, um eigene Entwicklungen im Automotiveumfeld voranzubringen. Der Betreiber der zentralen Recheneinrichtung 1, beispielsweise der Fahrzeughersteller, kann von den Dritten 5 eine Gebühr verlangen, um über die beschriebene Infrastruktur auf die Fahrzeuge 2 zugreifen zu können.

## Patentansprüche

1. Fahrzeugökosystem (3), umfassend eine zentrale Recheneinrichtung (1) und eine Fahrzeugflotte, wobei die Fahrzeuge (2) der Fahrzeugflotte mit der zentralen Recheneinrichtung (1) in bidirektionaler Kommunikation stehen und dazu eingerichtet sind, in Ihrer Konfiguration durch das Empfangen von Informationen von der zentralen Recheneinrichtung (1) geändert zu werden,
**dadurch gekennzeichnet, dass**
- die zentrale Recheneinrichtung (1) dazu eingerichtet ist, einen Entwicklungsauftrag zumindest zu erhalten, wobei der Entwicklungsauftrag zumindest beschreibt, welche Fahrzeugkomponente weiterzuentwickeln ist;
- die zentrale Recheneinrichtung (1) ferner dazu eingerichtet ist, in Abhängigkeit des Entwicklungsauftrags ein Entwicklungsdatenpaket zu erzeugen und dieses an eine erste Menge (4.1) an Fahrzeugen (2) der Fahrzeugflotte zu verteilen, wobei das Entwicklungsdatenpaket zumindest Interaktionsinformationen sowie optional Konfigurationsinformationen umfasst, wobei die Interaktionsinformationen einen vordefinierten Interaktionsablauf mit Fahrzeuginsassen über eine Mensch-Maschine-Schnittstelle beschreiben und die Konfigurationsinformationen Informationen zum Einbringen einer neuen und/oder Ändern einer bestehenden, auf Software basierenden Fahrzeugfunktionalität enthalten;
- die zentrale Recheneinrichtung (1) ferner dazu eingerichtet ist, die erste Menge (4.1) an Fahrzeugen (2) der Fahrzeugflotte zur Ausführung des Entwicklungsdatenpakets anzusteuern, wobei in den Fahrzeugen (2) jeweils in Abhängigkeit der Interaktionsinformationen zumindest eine Fahrzeugfunktionalität und der Interaktionsablauf ausgeführt werden sowie optional in Abhängigkeit der Konfigurationsinformationen zumindest eine die Fahrzeugfunktionalität betreffende Fahrzeugkonfiguration geändert wird, wobei die Fahrzeuge (2) dazu eingerichtet sind, im Zuge des Interaktionsablaufs bezogene Nutzerinteraktionsinformationen zu erfassen und an die zentrale Recheneinrichtung (1) zu übermitteln;
- die zentrale Recheneinrichtung (1) ferner dazu eingerichtet ist, die von der ersten Menge (4.1) an Fahrzeugen (2) der Fahrzeugflotte erhaltenen Nutzerinteraktionsinformationen zu verarbeiten und in Abhängigkeit der Verarbeitung der Nutzerinteraktionsinformationen ein Einbringungsdatenpaket zu erzeugen, wobei das Einbringungsdatenpaket Informationen zum Einbringen und/oder Ändern besagter Fahrzeugfunktionalität enthält; und
- die zentrale Recheneinrichtung (1) ferner dazu eingerichtet ist, das Einbringungsdatenpaket an eine zweite Menge (4.2) an Fahrzeugen (2) der Fahrzeugflotte zu verteilen und dort jeweils zum Implementieren auszuführen; und wobei
die zentrale Recheneinrichtung (1) dazu eingerichtet ist, einen Entwicklungsauftrag selbst zu initiieren, wobei zumindest eine Teilmenge der Fahrzeuge (2) der Fahrzeugflotte dazu eingerichtet ist, Nutzungsinformationen zu erheben und an die zentrale Recheneinrichtung (1) zu übertragen, wobei die Nutzungsinformationen einen Fahrzeugfunktionalitätenablauf beschreiben, und die zentrale Recheneinrichtung (1) ferner dazu eingerichtet ist, die Nutzungsinformationen zu verarbeiten und darin zu erkennen, dass das Selbstinitiieren des Entwicklungsauftrags notwendig ist, wenn ein Vergleich eines im Fahrzeugfunktionalitätenablauf enthaltenen Interaktionserfolgs mit einem Interaktionserfolgsschwellwert ergibt, dass der Interaktionserfolg kleiner ist als der Interaktionserfolgsschwellwert, wobei der Interaktionserfolg ein Maß für dir korrekte Umsetzung eines von einem Fahrzeuginsassen im Rahmen des Fahrzeugfunktionalitätenablaufs erteilten Befehls darstellt.

2. Fahrzeugökosystem (3) nach Anspruch 1,
**dadurch gekennzeichnet, dass**
die zweite Menge (4.2) an Fahrzeugen (2) größer ist als die erste Menge (4.1) an Fahrzeugen (2).

3. Fahrzeugökosystem (3) nach Anspruch 1 oder 2,
**dadurch gekennzeichnet, dass**
die zentrale Recheneinrichtung (1) über eine Zugriffsschnittstelle verfügt und ferner dazu eingerichtet ist, Dritten (5) über die Zugriffsschnittstelle das Initiieren eines Entwicklungsauftrags zu ermöglichen, wobei dabei die zentrale Recheneinrichtung (1) als Mediator zum Entscheiden wie tief besagte Dritte (5) in die Konfiguration eines jeweiligen Fahrzeugs (2) eingreifen dürfen fungiert.

4. Fahrzeugökosystem (3) nach einem der Ansprüche 1 bis 3,
**dadurch gekennzeichnet, dass**
zumindest eine Teilmenge der Fahrzeuge (2) der Fahrzeugflotte dazu eingerichtet ist, Fahrzeugcharakteristikinformationen und/oder Nutzercharakteristikinformationen zu erheben und an die zentrale Recheneinrichtung (1) zu übermitteln und die zentrale Recheneinrichtung (1) ferner dazu eingerichtet ist, die erste und/oder zweite Menge (4.1, 4.2) an Fahrzeugen (2) der Fahrzeugflotte unter Berücksichtigung der Fahrzeugcharakteristikinformationen und/oder Nutzercharakteristikinformationen zu bestimmen.

5. Fahrzeugökosystem (3) nach einem der Ansprüche 1 bis 4,
**dadurch gekennzeichnet, dass**
die zentrale Recheneinrichtung (1) ferner dazu eingerichtet ist, Bereitschaftszeitinformationen zu empfangen, welche beschreiben, zu welchen Zeiten ein jeweiliger Fahrzeugnutzer für die Nutzung seines Fahrzeugs (2) bereitsteht, um die die erste Menge (4.1) an Fahrzeugen (2) der Fahrzeugflotte unter Berücksichtigung der Bereitschaftszeitinformationen zu bestimmen.

6. Fahrzeugökosystem (3) nach Anspruch 5,
**dadurch gekennzeichnet, dass**
zumindest eine Teilmenge der Fahrzeuge (2) der Fahrzeugflotte dazu eingerichtet ist, Routeninformationen an die zentrale Recheneinrichtung (1) zu übermitteln und die zentrale Recheneinrichtung (1) ferner dazu eingerichtet ist, die Routeninformationen zur Ermittlung der Bereitschaftszeitinformationen zu verarbeiten.

7. Fahrzeugökosystem (3) nach einem der Ansprüche 1 bis 6,
**dadurch gekennzeichnet, dass**
die zentrale Recheneinrichtung (1) ferner dazu eingerichtet ist, den einzelnen Fahrzeugnutzern jeweils ein individuelles Anreizkonto zur Verfügung zu stellen und einem jeweiligen Anreizkonto Anreizguthaben gutzuschreiben, wenn der respektive Fahrzeugnutzer als Teil der ersten Menge (4.1) an Fahrzeugen (2) der Fahrzeugflotte der zentralen Recheneinrichtung (1) Nutzerinteraktionsinformationen bereitstellt.

8. Fahrzeugökosystem (3) nach einem der Ansprüche 1 bis 7,
**dadurch gekennzeichnet, dass**
die Fahrzeuge (2) der Fahrzeugflotte dazu eingerichtet sind, zur Ausführung eines Entwicklungsdatenpakets eine abgesicherte Umgebung bereitzustellen, wobei der Zugriff auf Fahrzeugressourcen in der abgesicherten Umgebung gegenüber dem normalen Betrieb eingeschränkt ist.

## Claims

1. Vehicle ecosystem (3) comprising a central computing device (1) and a vehicle fleet, the vehicles (2) of the vehicle fleet being in bidirectional communication with the central computing device (1) and being configured to have their configuration changed by the reception of information from the central computing device (1),
**characterized in that**
- the central computing device (1) is configured to at least receive a development order, the development order at least describing which vehicle component is to be further developed;
- the central computing device (1) is further configured to generate a development data packet depending on the development order and to distribute this to a first set (4.1) of vehicles (2) of the vehicle fleet, the development data packet comprising at least interaction information and optionally configuration information, the interaction information describing a predefined interaction sequence with vehicle occupants via a human-machine interface and the configuration information containing information for introducing a new and/or changing an existing software-based vehicle functionality;
- the central computing device (1) is further configured to actuate the first set (4.1) of vehicles (2) of the vehicle fleet to execute the development data packet, at least one vehicle functionality and the interaction sequence being executed in the vehicles (2) depending on the interaction information in each case, and, optionally, at least one vehicle configuration relating to the vehicle functionality being changed depending on the configuration information, the vehicles (2) being configured to record user interaction information obtained in the course of the interaction sequence and to transmit it to the central computing device (1);
- the central computing device (1) is further configured to process the user interaction information received from the first set (4.1) of vehicles (2) of the vehicle fleet and, depending on the processing of the user interaction information, to generate an introduction data packet, the introduction data packet containing information for introducing and/or changing said vehicle functionality; and
- the central computing device (1) is further configured to distribute the introduction data packet to a second set (4.2) of vehicles (2) of the vehicle fleet and to execute it there for implementation in each case; and
the central computing device (1) being configured to initiate a development order itself, at least a subset of the vehicles (2) of the vehicle fleet being configured to collect usage information and transmit it to the central computing device (1), the usage information describing a vehicle functionality sequence, and the central computing device (1) being further configured to process the usage information and to identify therein that the self-initiation of the development order is necessary when a comparison of an interaction success contained in the vehicle functionality sequence with an interaction success threshold value shows that the interaction success is less than the interaction success threshold value, the interaction success representing a measure of the correct implementation of a command issued by a vehicle occupant as part of the vehicle functionality sequence.

2. Vehicle ecosystem (3) according to claim 1,
**characterized in that**
the second set (4.2) of vehicles (2) is larger than the first set (4.1) of vehicles (2).

3. Vehicle ecosystem (3) according to claim 1 or 2,
**characterized in that**
the central computing device (1) has an access interface and is further configured to allow third parties (5) to initiate a development order via the access interface, the central computing device (1) functioning as a mediator for deciding how deeply said third parties (5) may intervene in the configuration of a relevant vehicle (2).

4. Vehicle ecosystem (3) according to any of claims 1 to 3,
**characterized in that**
at least a subset of the vehicles (2) of the vehicle fleet is configured to collect vehicle characteristic information and/or user characteristic information and to transmit it to the central computing device (1), and the central computing device (1) is further configured to determine the first and/or second set (4.1, 4.2) of vehicles (2) of the vehicle fleet, taking into account the vehicle characteristic information and/or user characteristic information.

5. Vehicle ecosystem (3) according to any of claims 1 to 4,
**characterized in that**
the central computing device (1) is further configured to receive standby-time information, which describes the times at which a relevant vehicle user is standing by to use their vehicle (2), in order to determine the first set (4.1) of vehicles (2) of the vehicle fleet, taking into account the standby-time information.

6. Vehicle ecosystem (3) according to claim 5,
**characterized in that**
at least a subset of the vehicles (2) of the vehicle fleet is configured to transmit route information to the central computing device (1) and the central computing device (1) is further configured to process the route information to determine the standby-time information.

7. Vehicle ecosystem (3) according to any of claims 1 to 6,
**characterized in that**
the central computing device (1) is further configured to provide each individual vehicle user with an individual incentive account and to credit incentive credit to a relevant incentive account if the relevant vehicle user provides user interaction information to the central computing device (1) as part of the first set (4.1) of vehicles (2) of the vehicle fleet.

8. Vehicle ecosystem (3) according to any of claims 1 to 7,
**characterized in that**
the vehicles (2) of the vehicle fleet are configured to provide a secure environment for executing a development data packet, access to vehicle resources in the secure environment being restricted compared to normal operation.

## Revendications

1. Écosystème de véhicule (3), comprenant un dispositif de calcul central (1) et une flotte de véhicules, dans lequel les véhicules (2) de la flotte de véhicules sont en communication bidirectionnelle avec le dispositif de calcul central (1) et sont conçus pour être modifiés dans leur configuration par la réception d'informations provenant du dispositif de calcul central (1),
**caractérisé en ce que**
- le dispositif de calcul central (1) est conçu pour recevoir au moins un ordre de développement, dans lequel l'ordre de développement décrit au moins quel composant de véhicule doit être développé plus avant ;
- le dispositif de calcul central (1) est en outre conçu pour générer un paquet de données de développement en fonction de l'ordre de développement et pour distribuer celui-ci à un premier ensemble (4.1) de véhicules (2) de la flotte de véhicules, dans lequel le paquet de données de développement comprend au moins des informations d'interaction ainsi qu'en option des informations de configuration, dans lequel les informations d'interaction décrivent un déroulement d'interaction prédéfini avec des occupants de véhicule par l'intermédiaire d'une interface homme-machine et les informations de configuration contiennent des informations pour l'introduction d'une nouvelle fonctionnalité de véhicule et/ou la modification d'une fonctionnalité existante basée sur un logiciel ;
- le dispositif de calcul central (1) est en outre conçu pour commander le premier ensemble (4.1) de véhicules (2) de la flotte de véhicules pour l'exécution du paquet de données de développement, dans lequel au moins une fonctionnalité de véhicule et le déroulement de l'interaction sont exécutés dans les véhicules (2) respectivement en fonction des informations d'interaction et, en option, au moins une configuration de véhicule concernant la fonctionnalité de véhicule est modifiée en fonction des informations de configuration, dans lequel les véhicules (2) sont conçus pour acquérir des informations d'interaction d'utilisateur obtenues au cours du déroulement d'interaction et pour les transmettre au dispositif de calcul central (1) ;
- le dispositif de calcul central (1) est en outre conçu pour traiter les informations d'interaction d'utilisateur obtenues à partir du premier ensemble (4.1) de véhicules (2) de la flotte de véhicules et pour générer un paquet de données d'introduction en fonction du traitement des informations d'interaction d'utilisateur, dans lequel le paquet de données d'introduction contient des informations pour introduire et/ou modifier ladite fonctionnalité de véhicule ; et
- le dispositif de calcul central (1) est en outre conçu pour distribuer le paquet de données d'introduction à un second ensemble (4.2) de véhicules (2) de la flotte de véhicules et pour l'y exécuter respectivement pour la mise en œuvre ; et dans lequel
le dispositif de calcul central (1) est conçu pour lancer lui-même un ordre de développement, dans lequel au moins un sous-ensemble des véhicules (2) de la flotte de véhicules est conçu pour collecter des informations d'utilisation et les transmettre au dispositif de calcul central (1), dans lequel les informations d'utilisation décrivent un déroulement de fonctionnalités de véhicule, et le dispositif de calcul central (1) est en outre conçu pour traiter les informations d'utilisation et reconnaître dans celles-ci que l'auto-lancement de l'ordre de développement est nécessaire lorsqu'une comparaison d'un succès d'interaction contenu dans le déroulement de fonctionnalité de véhicule avec une valeur seuil de succès d'interaction montre que le succès d'interaction est inférieur à la valeur seuil de succès d'interaction, dans lequel le succès d'interaction représente une mesure de la mise en place correcte d'une commande donnée par un occupant de véhicule dans le cadre du déroulement de fonctionnalité de véhicule.

2. Écosystème de véhicule (3) selon la revendication 1,
**caractérisé en ce que**
le second ensemble (4.2) de véhicules (2) est plus grand que le premier ensemble (4.1) de véhicules (2).

3. Écosystème de véhicule (3) selon la revendication 1 ou 2,
**caractérisé en ce que**
le dispositif de calcul central (1) dispose d'une interface d'accès et est en outre conçu pour permettre à des tiers (5) de lancer un ordre de développement par l'intermédiaire de l'interface d'accès, dans lequel le dispositif de calcul central (1) fait alors office de médiateur pour décider jusqu'à quel point lesdits tiers (5) peuvent intervenir dans la configuration d'un véhicule (2) respectif.

4. Écosystème de véhicule (3) selon l'une des revendications 1 à 3,
**caractérisé en ce que**
au moins un sous-ensemble des véhicules (2) de la flotte de véhicules est conçu pour collecter des informations de caractéristique de véhicule et/ou des informations de caractéristique d'utilisateur et pour les transmettre au dispositif de calcul central (1) et le dispositif de calcul central (1) est en outre conçu pour définir le premier et/ou le second ensemble (4.1, 4.2) de véhicules (2) de la flotte de véhicules en tenant compte des informations de caractéristique de véhicule et/ou des informations de caractéristique d'utilisateur.

5. Écosystème de véhicule (3) selon l'une des revendications 1 à 4,
**caractérisé en ce que**
le dispositif de calcul central (1) est en outre conçu pour recevoir des informations de temps de disponibilité qui décrivent à quelles heures un utilisateur de véhicule respectif est prêt à utiliser son véhicule (2), afin de définir le premier ensemble (4.1) de véhicules (2) de la flotte de véhicules en tenant compte des informations de temps de disponibilité.

6. Écosystème de véhicule (3) selon la revendication 5,
**caractérisé en ce que**
au moins un sous-ensemble des véhicules (2) de la flotte de véhicules est conçu pour transmettre des informations d'itinéraire au dispositif de calcul central (1) et le dispositif de calcul central (1) est en outre conçu pour traiter les informations d'itinéraire pour déterminer les informations de temps de disponibilité.

7. Écosystème de véhicule (3) selon l'une des revendications 1 à 6,
**caractérisé en ce que**
le dispositif de calcul central (1) est en outre conçu pour mettre à la disposition des utilisateurs de véhicule individuels respectivement un compte d'incitation individuel et pour créditer un crédit d'incitation respectif à un compte d'incitation respectif lorsque l'utilisateur de véhicule respectif, en tant que partie du premier ensemble (4.1) de véhicules (2) de la flotte de véhicules, fournit des informations d'interaction d'utilisateur au dispositif de calcul central (1).

8. Écosystème de véhicule (3) selon l'une des revendications 1 à 7,
**caractérisé en ce que**
les véhicules (2) de la flotte de véhicules sont conçus pour fournir un environnement sécurisé pour l'exécution d'un paquet de données de développement, dans lequel l'accès aux ressources de véhicule dans l'environnement sécurisé est limité par rapport au fonctionnement normal.
